**Europäisches Patentamt**

**European Patent Office**

**Office européen des brevets**

(11) Numéro de publication: **0 022 587**

**B1**

(12) **FASCICULE DE BREVET EUROPEEN**

(45) Date de publication du fascicule du brevet: **28.09.83**

(51) Int. Cl.³: **C 12 C 5/00, C 12 C 7/04**

(21) Numéro de dépôt: **80200496.0**

(22) Date de dépôt: **27.05.80**

(54) **Procédé de fabrication d'une bière colloïdalement stable.**

(30) Priorité: **07.06.79 FR 7914556**

(43) Date de publication de la demande:
**21.01.81 Bulletin 81/3**

(45) Mention de la délivrance du brevet:
**28.09.83 Bulletin 83/39**

(84) Etats contractants désignés:
**AT CH DE GB IT LI LU NL SE**

(56) Documents cités:
**BE - A - 344 726**
**BE - A - 406 532**
**CH - A - 335 624**
**CH - A - 486 555**
**DE - C - 128 172**
**DE - C - 923 604**
**FR - A - 537 773**
**FR - A - 701 669**
**FR - A - 2 147 396**
**GB - A - 1 166 973**
**GB - A - 1 232 275**
**GB - A - 1 384 292**
**US - A - 2 068 738**

(73) Titulaire: **COMPAGNIE INTERNATIONALE DE PARTICIPATION ET D'INVESTISSEMENT CIPARI S.A.**
**4-10 Boulevard d'Avranches**
**Luxembourg (LU)**

(72) Inventeur: **Devreux, André Fernand Oscar**
**Rue Buisseret 60**
**B-7000 Mons (BE)**
Inventeur: **Jerumanis, Janis**
**Avenue de l'Abbaye d'Affligem 14**
**B-1300 Wavre (Chermont) (BE)**

(74) Mandataire: **De Brabanter, Maurice et al,**
**Bureau VANDER HAEGHEN 63 Avenue de la Toison d'Or**
**B-1060 Bruxelles (BE)**

Courier Press, Leamington Spa, England.

Documents cités:
**US - A - 2 179 203**
**US - A - 2 198 221**
**US - A - 3 443 958**

**Malting and Brewing Science J. S. Hough et al.
1977 ed. Fletcher & Son Ltd. pp. 211, 212,
639—641**

**Le dossier contient des informations techniques
présentées postérieurement au dépôt de la
demande et ne figurant pas dans le présent
fascicule.**

Procédé de fabrication d'une bière colloïdalement stable

La présente invention est relative à un procédé de fabrication d'une bière colloïdalement stable. Elle vise plus particulièrement à modifier le procédé classique de fabrication de bière, en vue d'améliorer la stabilité colloïdale de la bière, c'est-à-dire de réduire la formation de troubles colloïdaux dans la bière.

On sait que parmi les caractères organoleptiques souhaités de la bière, sa clarté et sa brilliance sont importantes aux yeux du consommateur.

Or, des troubles de nature colloïdale apparaissent fréquemment dans la bière par suite de l'oxydation des polyphénols qui y sont présents et qui forment des polymères se liant aux protéines en présence pour former un précipité colloïdal se présentant sous forme d'un voile ou trouble irréversible.

On connaît de nombreux procédés visant à éviter ou à retarder la formation de tels troubles, en assurant l'élimination des protéines qui en sont la cause.

C'est ainsi qui l'on a proposé l'addition à la bière d'enzymes protéolytiques, telles que la papaïne, de formol ou de tanin.

L'inconvénient de ces additions réside dans le fait qu'elles introduisent dans la bière des matières d'origine extrinsèque, ce qui est interdit dans de nombreux pays ou nécessite la mention de cette addition sur les bouteilles mises au marché. Par ailleurs, les résultats obtenus par ces additions ne sont pas toujours suffisants, du moins aux concentrations admissibles de la matière d'addition.

On connaît aussi un procédé dans lequel on filtre la bière finie sur de la polyvinylpyrrolidone qui présente une grande affinité pour les polyphénols. Ce procédé est coûteux, parce qu'il exige l'emploi d'un filtre spécial et une opération supplémentaire, tandis que le coût élevé de la polyvinylpyrrolidone exige sa régénération et que l'emploi de polyvinylpyrrolidone ne permet d'éliminer qu'une fraction des polyphénols en présence, le restant de ceux-ci continuant à s'oxyder et à former des polymères qui provoquent encore un trouble colloïdal avec les protéines.

Il est également connu de filtrer la bière sur du silicagel qui fixe les protéines, mais le rendement de ce procédé est insuffisant, car il permet de retenir seulement moins de 10% de ces protéines et ne prévient donc pas suffisamment la formation de troubles colloïdaux.

On sait par ailleurs que certaines orges contiennent un enzyme du type polyphénoloxydase qui favorise la polymérisation oxydative des polyphénols. Malheureusement, cet enzyme disparaît progressivement lors de la germination de l'orge et surtout lors du touraillage, de telle sorte que le malt obtenu à partir de cette orge ne contient pratiquement plus de polyphénoloxydase.

Enfin, on sait (Malting and Brewing Science, J. S. Hough et al, 1977, éd. Fletcher & Son Ltd., pages 211, 212 et 639 à 641) que l'oxygène assisté de polyphénoloxydase polymérise les polyphénols, les tanins et peut-être d'autres précurseurs de trouble, de sorte qu'ils sont retenus dans le brassin.

Or, on a trouvé à présent que l'addition de polyphénoloxydase et d'oxygène (à l'exclusion d'air) dès le début de la préparation d'un brassin et pendant toute la durée de cette préparation permet une réduction extraordinaire de la teneur en polyphénols du moût, tandis que la présence d'oxygène seulement au cours de la phase finale de la préparation d'un brassin additionné de polyphénoloxydase diminue, de manière étonnamment moins importante, la teneur en polyphénols du moût, laquelle teneur est responsable du trouble apparaissant dans la bière.

La présente invention concerne, dès lors, un procédé de préparation d'une bière colloïdalement stable, dans lequel on utilise de la polyphénoloxydase et de l'oxygène pour précipiter les polymères formés par oxydation des polyphénols conjointement avec les protéines en présence dans un mélange de farine de malt et d'eau chauffé pour former un brassin, ce procédé étant caractérisé en ce qu'on soumet le mélange de farine de malt et d'eau à l'action simultanée de polyphénoloxydase et d'oxygène dès le début de la préparation du brassin et pendant toute la durée de cette préparation et on sépare le précipité obtenu par filtration du brassin obtenu.

Le procédé suivant l'invention permet d'inhiber la formation de troubles colloïdaux dans la bière finie, sans conférer à cette dernière une coloration indésirable.

On sait que le procédé classique de fabrication de bière implique les étapes suivantes:

(1) préparation d'un brassin par chauffage et agitation d'un mélange de malt et d'eau à une température d'environ 50 à 75°C dans une cuve pendant une durée de 2 à 3 heures;

(2) filtration du brassin obtenu dans un filtre;

(3) traitement à l'ébullition du moût obtenu comme filtrat pendant environ 2 heures, après addition de houblon à ce moût;

(4) filtration du liquide ayant subi le traitement à l'ébullition;

(5) fermentation principale du moût filtré en présence de levure et d'oxygène pendant 5 à 10 jours;

(6) fermentation secondaire ou garde de la bière à basse température (0 à 5°C) pendant deux à douze semaines;

(7) filtration de la bière par exemple sur kieselguhr;

(8) stockage et soutirage de la bière filtrée.

L'addition de polyphénoloxydase et d'oxygène s'effectue, conformément à la présente invention, pendant toute la durée de la première étape du procédé classique de fabrication de bière décrit ci-dessus.

On peut utiliser, dans le cadre de l'invention, de la polyphénoloxydase pure ou sensiblement pure ou un produit végétal en contenant.

La préparation d'extraits bruts et purifiés de polyphénoloxydase à partir d'orge est décrite dans l'article de N. Van Huynh et al publié dans J. Amer. Soc. Brev. Chem., *35*, 1977, page 153.

Suivant une particularité de l'invention, on utilise, de préférence, comme source de polyphénoloxydase un produit végétal riche ou enrichi en polyphénoloxydase sous forme de farine.

Comme produit végétal riche en polyphénoloxydase, on peut utiliser, par exemple, soit un extrait d'une plate riche en polyphénoloxydase, soit une partie d'une telle plant. Parmi les plantes contenant des proportions notables de polyphénoloxydase, on peut citer l'orge, notamment de la variété Aramir, et le froment.

On peut donc utiliser un extrait enrichi en polyphénoloxydase obtenu par trempage de grains de céréales, par exemple d'orge ou de froment, dans de l'eau pendant 24 à 48 heures, voire même des grains crus de ces céréales ou encore les couches externes contenant des cellules à aleurone, riches en polyphénoloxydase, de ces grains.

De préférence, on utilise une farine obtenue à partir des couches extérieures contenant des cellules à aleurone de grains de froment, en une proportion d'environ 2 à 5% en pods, par rapport au poids du malt, cette farine ayant un pouvoir enzymatique d'au moins 0,6 et, de préférence, de 0,9 à 1,1 micromole d'oxygène consommé par minute et par gramme de farine.

Le pouvoir enzymatique d'une farine est mesuré en déterminant la quantité d'oxygène consommée par la farine dans un système farinecatéchol en présence d'oxygène par un procédé connu.

On peut aussi employer de la farine de grains contenant une proportion suffisante de polyphénoloxydase, de préférence sous forme d'une masse comprimée, par exemple en pastilles.

Le produit végétal contenant de la polyphénoloxydase, par exemple sous forme de grains crus ou de farine éventuellement comprimée, ces grains étant notamment des grains d'orge, par exemple de la variété Aramir ou de froment ou sous forme d'un extrait de polyphénoloxydase d'un tel produit végétal, est ajouté conjointement avec de l'oxygène dès le début de la préparation du brassin et pendant toute la durée de cette préparation.

La proportion d'enzyme à utiliser, sous forme d'extrait ou sous forme de grains ou parties de grains riches en cet enzyme est variable et dépend de la teneur en protéines du malt. Une proportion avantageuse d'extrait d'enzyme brut est d'environ 2% en poids par rapport au poids de malt utilisé. Lorsqu'on utilise de l'orge de variété Aramir sous forme de grains crus moulus, un pourcentage favorable de cette orge est d'au moins 20% en poinds par rapport au malt utilisé. Lorsque le brassage s'effectue avec un mélange de malt et de froment sous forme de grains crus moulus, la proportion de ces derniers est, de préférence, d'environ 10 à 20% du poids du malt. Par contre, si l'on fait usage des parties extérieures de grains de froment débarrassés du son, lesquelles parties sont particulièrement riches en polyphénoloxydase, des proportions d'environ 2 à 10% donnent d'excellents résultats.

Les exemples suivants illustrent l'invention.

### Exemples 1 à 4

50 g de farine de malt sont mélangés, éventuellement avec des proportions diverses d'extrait de polyphénoloxydase, de farine de grains d'orge Aramir ou de froment ou de farine de parties externes de grains de froment, en diverses proportions, à 400 g d'eau à 45°C.

Dans ces exemples, on a utilisé les produits suivants contenant de la polyphénoloxydase.

1. Extrait brut d'enzyme de froment

Cet extrait brut a été préparé en homogénéisant, dans un mélangeur tournant à environ 16.000 tours par minute, 40 grammes de farine de froment obtenue par tamisage, avec 200 ml d'eau distillée. Le mélange homogénéisé a été ensuite centrifugé à 10.000 tours par minute et le liquide surnageant a été recueilli et lyophilisé.

2. Grains d'orge Aramir ou grains de froment traités

Des grains d'orge Aramir ou de froment ont été trempés dans de l'eau distillée pendant 24 à 48 heures. Ces grains ont ensuite été moulus et la farine obtenue a été utilisée comme produit enrichi en polyphénoloxydase.

3. Fraction riche en enzyme de grains de froment

Cette fraction a été obtenue en séparant des grains de froment la couche périphérique entourant l'endosperme et contenant des cellules à aleurone, laquelle couche est située sous l'enveloppe externe (paille) des grains, cette couche étant moulue.

La température est maintenue à 45°C pendant 30 minutes, puis élevée à 70°C en l'espace de 20 minutes. Cette température de 70°C est maintenue pendant 60 minutes pour assurer la saccharification. Pendant toute la durée de cette phase de brassage, le mélange est maintenu en contact avec de l'oxygène.

Le brassin obtenu est filtré pour séparer le moût de la drèche, après quoi le moût est soumis à une ébullition pendant 30 minutes, en présence d'extrait de houblon.

Après filtration et refroidissement jusqu'à 10°C, le moût est ensuite mis en fermentation au moyen de levure (basse fermentation) pendant 10 jours.

Après séparation de 90% de la levure par filtration, la bière obtenue est maintenue en garde à 0°C sous une atmosphère d'anhydride carbonique. Finalement la bière est clarifiée par ultracentrifugation.

La stabilité colloïdale de la bière est mesurée par le test de Chapon à l'alcool froid (Chapon et Chamardin, EBC Proceedings, 1967, pages 389—405).

Les résultats de ces mesures sont indiqués dans le tableau suivant:

Il ressort clairement de ce tableau que, lorsqu'un brassin est préparé en présence de l'enzyme polyphénoloxydase, sous forme d'extrait ou sous forme d'un produit naturel comestible en contenant, la stabilité colloïdale de la bière peut être réduite dans des proportions étonnamment élevées, ce qui a pour effet d'éliminer pratiquement toute possibilité de formation de troubles ou voiles colloïdaux dans la bière.

On a constaté que l'addition à du malt de masses compactes ou comprimées, par

## TABLEAU I

| Brassage | Pourcentage en poids de produit enzymatique par rapport au poids de malt | Stabilité colloïdale Mesure du trouble en % |
|---|---|---|
| avec malt sans produit enzymatique (témoin) | 0 | 100 |
| avec extrait brut d'enzyme de froment | 2 | 67 |
| avec farine de grains d'orge Aramir | 40 | 82 |
| avec farine de grains de froment | 20 | 64,3 |
| | 30 | 56,3 |
| | 40 | 36,3 |
| avec fraction riche en enzyme de grains de froment | 5 | 58 |
| | 20 | 57,5 |

exemple sous forme de pastilles, de farine de céréale contenant de la polyphénoloxydase donne des résultats particulièrement bons.

Il est à noter qu'au lieu de polyphénoloxydase pure ou sensiblement pure ou d'un extrait de polyphénoloxydase, d'orge par exemple de la variété Aramir, de froment ou de fractions de ces deux céréales, riches en polyphénoloxydase, on peut utiliser entre autres d'autres plantes ou parties de plantes contenant cet enzyme, notamment du riz, de la pomme de terre, etc.

## Revendications

1. Procédé de préparation d'une bière colloïdalement stable, dans lequel on utilise de la polyphénoloxydase et de l'oxygène pour précipiter les polymères formés par oxydation des polyphénols conjointement avec les protéines en présence dans un mélange de farine de malt et d'eau chauffé pour former un brassin, caractérisé en ce qu'on soumet le mélange de farine de malt et d'eau à l'action simultanée de polyphénoloxydase et d'oxygène dès le début de la préparation du brassin et pendant toute la durée de cette préparation et on sépare le précipité obtenu par filtration du brassin obtenu.

2. Procédé suivant la revendication 1, caractérisé en ce qu'on utilise comme source de polyphénoloxydase un produit végétal riche ou enrichi en polyphénoloxydase sous forme de farine.

3. Procédé suivant la revendication 1, caractérisé en ce qu'on utilise comme source de polyphénoloxydase de la farine d'une fraction de grains de froment ou d'orge riche en polyphénoloxydase.

## Patentansprüche

1. Verfahren zur Herstellung eines kolloidal stabilen Bieres, in welchem man Polyphenoloxydase und Sauerstoff verwendet um die durch Oxydation der Polyphenole gebildeten polymerischen Substanzen zusammen mit den in einem Gemisch von Maltstaub und Wasser, welches erhitzt wird um eine Würze zu erhalten, vorhandenen Proteinen auszufällen, dadurch gekennzeichnet, dass das Gemisch von Maltstaub und Wasser ab Beginn der Zubereitung der Würze und während der ganzen Dauer dieser Zubereitung gleichzeitig der Aktion der Polyphenoloxydase und des Sauerstoffs unterworfen und der gebildete Niederschlag durch Filtrieren du erhaltenen Würze abgetrennt wird.

2. Verfahren nach Anspruch 1, dadurch gekennzeichnet, dass als Polyphenoloxydasequelle ein pflanzliches, an Polyphenoloxydase reiches oder angereichertes Produkt in Form von Mehl oder Staub verwendet wird.

3. Verfahren nach Anspruch 1, dadurch gekennzeichnet, dass als Polyphenoloxydasequelle das Mehl einer an Polyphenoloxydase reichen Weizenkorn- oder Gerstenkornfraktion verwendet wird.

## Claims

1. Process for preparing a colloidally stable beer in which polyphenoloxidase and oxygen are used for precipitating the polymers formed by oxidation of the polyphenols jointly with the proteins present in a mixture of malt flour and water heated for forming a brew, characterized in that the mixture of malt flour and water is subjected to the simultaneous action of polyphenoloxidase and oxygen from the start of the preparation of the brew and during the whole duration of said preparation and the obtained precipitate is separated from the obtained brew by filtration.

2. Process according to claim 1, characterized in that a vegetable product rich or enriched with polyphenoloxidase in the form of a flour is used as polyphenoloxidase source.

3. Process according to claim 1, characterized in that a flour of a fraction of wheat or barley grains rich in polyphenoloxidase is used as polyphenoloxidase source.